# EUROPÄISCHE PATENTSCHRIFT

(11) **EP 0 456 121 B1**
(45) Veröffentlichungstag und Bekanntmachung des Hinweises auf die Patenterteilung: **22.03.1995**
(21) Anmeldenummer: 91107160.3
(22) Anmeldetag: 03.05.1991
(51) Int. Cl.: B29C 53/04, B29K 105/06

(54) **Verfahren zum Biegen von plattenförmigen Werkstücken sowie Biegemaschine zur Durchführung des Verfahrens**
Method of bending plate-like workpieces and bending machine for carrying out this method
Procédé pour le pliage d'objets plats ainsi que la machine de pliage pour la mise en oeuvre du procédé

(30) Priorität: 10.05.1990 DE 4014994
(43) Veröffentlichungstag der Anmeldung: 13.11.1991
(73) Patentinhaber: Wegener GmbH, D-52015 Aachen (DE)
(72) Erfinder: Weissfloch, Reinhard, Dr.-Ing, W-519 Stolberg-Breinig (DE)
(74) Vertreter: Paul, Dieter-Alfred, Dipl.-Ing.

(56) Entgegenhaltungen:
- FR-A- 1 187 932
- NL-A- 8 801 940
- US-A- 4 153 665
- US-A- 4 470 795
- US-A- 4 720 255
- COMPOSITES POLYMERS Nr. 1, März 1990, SHREWSBURY, GB Seiten 31 - 44; H. VANDREUMEL: 'Origami-Technology Creative Manufacturing of Advanced Composite Parts
- PATENT ABSTRACTS OF JAPAN vol. 9, no. 162 (M-394)(1885) 6. Juli 1985 & JP-A-60 36 134 (TOYODA DANBOORU KOGYO ) 25. Februar 1985
- PATENT ABSTRACTS OF JAPAN vol. 12, no. 347 (M-743)(3194) 19. September 1988 & JP-A-63 109 039 (AGENCY OF IND. SCIENCE & TECHNOLOGY. ) 13. Mai 1988

## Beschreibung

Die Erfindung betrifft Verfahren zum Biegen von plattenförmigen Werkstücken aus einem thermoplastischem Verbundwerkstoff, und zwar aus einem faserverstärkten Thermoplast gemäß Oberbegriff des Anspruchs 1 oder einem thermoplastischen Sandwichmaterial gemäß Oberbegriff des Anspruchs 3, bei dem das Werkstück im Bereich der Biegezone bis wenigstens zur Plastifizierung erhitzt und dann gebogen wird. Solche Verfahren sind aus Composites Polymers, Nr.1 März 1990, Seiten 31-44 bekannt. Ferner betrifft die Erfindung Biegemaschinen zur Durchführung dieses Verfahrens gemäß den Oberbegriffen der Ansprüche 11 und 13. Solche Maschinen sind aus der US-A-4 153 665 bekannt.

Zum Biegen von plattenförmigen Werkstücken aus thermoplastischem Kunststoff sind Biegemaschinen bekannt, die im mittleren Teil des Maschinenrahmens eine ortsfest angeordnete Klemmeinrichtung aufweisen, der - in Transportrichtung des Werkstückes gesehen - eine schwenkbar aufgehängte, leistenförmige Biegewange nachgelagert ist. Hinter der Klemmeinrichtung sind eine Heizeinrichtung und eine Halteeinrichtung auf einem in und gegen die Transportrichtung verschiebbaren Rahmen angeordnet. Die Heizeinrichtung besteht aus zwei übereinander angeordneten, vertikal verfahrbaren Heizschwertern, hinter denen die Halteeinrichtung in Form einer Klemmleiste angeordnet ist. Auf der anderen Seite der Biegewange ist eine Anschlagleiste vorgesehen, die auf zwei seitlichen Schienen verschiebbar gelagert ist.

Für einen Biegevorgang werden zunächst die Anschlagleiste und der Rahmen mit der Heizeinrichtung und der Halteeinrichtung symmetrisch zur Vorderkante der Biegewange eingestellt und fixiert. Dann wird das Werkstück derart eingeschoben, daß es zwischen die Klemmleisten der Halteeinrichtung und den beiden Heizschwertern zu liegen kommt. Mit der Vorderkante liegt das Werkstück am anschlägigen Bereich der Biegewange an. Die Heizschwerter werden dann zugefahren, so daß sie an beiden Seiten des Werkstückes anliegen und das Werkstück unter Bildung einer Biegezone so erhitzen, daß es an der Biegezone plastisch verformbar ist. Dabei wird das Werkstück sowohl von der Klemmeinrichtung als auch von der Halteeinrichtung festgehalten.

Wenn die Biegezone genügend erwärmt ist, werden die Klemm- und Halteeinrichtung deaktiviert, d.h. das Werkstück wird freigegeben. Es wird dann von Hand nach vorn in Richtung auf die Anschlagleiste verschoben, bis es dort zur Anlage kommt. Die Klemmeinrichtung wird anschließend wieder aktiviert, d.h. das Werkstück wird vor der Biegewange breitflächig abgestützt und festgeklemmt. Die Biegewange wird dann entsprechend dem gewünschten Biegewinkel hochgeschwenkt, so daß der vor der Klemmeinrichtung liegende Teil des Werkstückes an der Biegezone hochgebogen wird. Gleichzeitig wird die nächste Biegezone dadurch gebildet, daß die Heizschwerter wieder an dem dort befindlichen Teil des Werkstückes zur Anlage gebracht werden. Wenn der Biegevorgang abgeschlossen ist, werden die Klemm- und Halteeinrichtungen wieder gelöst und das Werkstück wieder bis zur Anschlagleist nach vorn geschoben, so daß die erhitzte Biegezone an der Vorderkante der Biegewange zu liegen kommt. Es schließt sich ein weiterer Biegevorgang an. Je nach Biegewinkel kann dann ein im Querschnitt mehreckiges, insbesondere quadratisches Rohrstück geformt werden.

Eine Weiterentwicklung dieser Biegemaschine ist in der DE-PS 36 37 436 beschrieben. Bei dieser Biegemaschine ist die Klemmeinrichtung in und gegen die Transportrichtung des Werkstückes verfahrbar ausgebildet. Sie dient dabei nicht mehr nur der Fixierung des Werkstückes beim Biegevorgang mittels der Biegewange, sondern übernimmt jetzt auch die Funktion der Halteeinrichtung bei der vorbekannten Biegemaschine, nämlich die Fixierung des Werkstückes während der Ausbildung der Biegezone mittels der Heizeinrichtung. Hierzu ist die Klemmeinrichtung im geöffnetem Zustand aus einer der Biegewange benachbarten Stellung in eine bezüglich der Biegezone von der Biegewange abgewandten Stellung verfahrbar und wird in Klemmstellung überführt. Nach Ausbildung der Biegezone wird die Klemmeinrichtung wieder in Richtung auf die Biegewange verschoben und transportiert dabei das Werkstück mit der erhitzten Biegezone bis zur Biegewange. Der Halteeinrichtung kommt bei dieser Biegemaschine nur noch die Funktion der Fixierung des Werkstückes zu, wenn die Klemmeinrichtung in deaktiviertem, also offenem Zustand von der Biegewange zurückgefahren wird. Auf Grund dieser Ausbildung der Biegemaschine besteht die Möglichkeit den Biegevorgang durch eine entsprechende Steuerung vollautomatisch ablaufen zu lassen, so daß nach Einlegen des Werkstückes und nach der Einstellung der Abstände zwischen zwei Biegezonen weitere Eingriffe nicht mehr erforderlich sind. In besonderer Ausbildung ist bei dieser Biegemaschine die Heizeinrichtung auf der Klemmeinrichtung angeordnet, so daß sie immer zusammen mit dieser verfahren wird.

Diese vorbekannten Biegemaschinen eignen sich nur zum Biegen von Werkstücken, die vollständig aus einem Thermoplast bestehen. In jüngerer Zeit haben jedoch thermoplastische Verbundwerkstoffe stark an Bedeutung zugenommen. Es sind dies insbesondere Thermoplaste, die mit Glas-, Kohlenstoff- oder Aramidfasern verstärkt sind, und zwar sowohl mit Kurzfasern als auch mit Endlosfasern. In letzterem Fall können die Fasern in Mattenform entweder regellos oder als Faserstränge oder -bändchen vorliegen, die zu Geweben oder Gelegen verarbeitet sind. Insbesondere bei neueren Kunststoffen mit hohen Verarbeitungstemperaturen wie beispielsweise PEEK (Polyetheretherketon), PPS (Polyphenylensulfid) oder PEI (Polyetherimid), werden häufig Faserverstärkungen verwendet und ergeben dann hochfeste Kunststoffteile, die vor allem im Flugzeugbau zur Anwendungen kommen. Bei diesen Werkstoffen bildete der thermoplastische Kunststoff die Matrix für die Faserverstärkung. Das Einbetten der Faserverstärkung geschieht insbesondere bei den vorgenannten Kunststoffen unter Hitzeeinwirkung und hohem Druck, wobei der Druck entweder in einer Form oder mittels Walzen erzeugt wird.

Daneben sind als thermoplastische Verbundwerkstoffe auch Sandwichplatten mit thermoplastischen Deckschichten und einem dazwischen angeordneten Stützkern bekannt.

Das Biegen von derartigen thermoplastischen Verbundwerkstoffen bereitet erhebliche Probleme. Soweit es sich um faserverstärkte Thermoplaste handelt, steht einem Biegen die Tatsache entgegen, daß die Fasern ihre Länge nicht ändern können. Beim Biegen kommt es somit insbesondere an der Außenseite der Biegezone zur Delaminierung, d.h. zur Aufhebung der Haftung zwischen der Kunststoffmatrix und den Fasern, oder zum Faserbruch. Im Bereich der Innenseite werden die Fasern gestaucht und treten dann aus dem Matrixmaterial heraus. Beides hat zur Folge, daß das Werkstück in der Biegezone erheblich an Festigkeit verliert. Alle Versuche, dem entgegenzuwirken, haben bisher nicht zu befriedigenden Ergebnissen geführt oder waren zur aufwendig.

Der Erfindung liegt die Aufgabe zu Grunde, ein Biegeverfahren zu finden, mit dem sich Werkstücke aus einem thermoplastischen Verbundwerkstoff ohne oder nur mit geringem Festigkeitsverlust gebogen werden können. Es ist ferner Aufgabe der Erfindung, eine möglichst zweckmäßige Biegemaschine zur Durchführung dieses Verfahrens bereitzustellen.

Soweit es das Biegen von faserverstärkten Thermoplasten angeht, wird die das Verfahren betreffende Aufgabe erfindungsgemäß dadurch gelöst, daß das Werkstück wenigstens von der vorgesehenen Innenseite der Biegezone her und auf die Biegezone begrenzt erhitzt wird und daß es dann um einen an der Innenseite anliegenden Biegebalken herumgebogen und die Biegezone in plastifiziertem Zustand von beiden Seiten des Werkstückes her einer Druckbeaufschlagung ausgesetzt wird. Dabei sollte die Wärmezufur vorzugsweise während des Biegevorgangs fortgesetzt werden.

Nach der Erfindung wird also das aus einem faserverstärkten Thermoplast bestehende Werkstück von der vorgesehenen Innenseite der Biegezone her erhitzt und nach ausreichender Erhitzung um einen Biegebalken herumgebogen. Dabei ist wesentlich, daß die Biegezone spätestens nach dem Biegevorgang einer Druckbeaufschlagung ausgesetzt wird, wobei der Druck etwa demjenigen entsprechen sollte, mit dem das Werkstück selbst hergestellt worden ist. Durch die vorstehende Kombination der Verfahrensschritte wird erreicht, daß eine eventuelle Delaminierung rückgängig gemacht wird und die Fasern erneut verpreßt werden, so daß die Festigkeit des Werkstückes in der Biegezone kaum oder gar nicht beeinträchtigt wird. Damit steht erstmals ein einfach auszuführendes Verfahren zur Verfügung, mit dem sich ein faserverstärktes Thermoplast ohne wesentliche Festigkeitsverluste biegen lassen.

Soweit es um das Biegen eines thermoplastischen Sandwichmaterials geht, ist eine Modifizierung des vorgenannten Verfahrens vorgesehen, bei dem das Werkstück wenigstens von der vorgesehenen Innenseite der Biegezone her und auf die Biegezone begrenzt erhitzt wird und es dann auf einen von der Innenseite des Werkstückes anliegenden Biegebalken herumgebogen wird, wobei die Wäremezufuhr während des Biegevorgangs fortgesetzt wird. Mit dieser Modifizierung wird darauf Rücksicht genommen, daß Sandwichmaterialien in aller Regel wesentlich dicker sind als faserverstärkte Thermoplaste und daß es deshalb wesentlich darauf ankommt, daß die Wärmezufuhr während des Biegevorgangs fortgesetzt wird. Wegen der Dicke des Werkstückes ist es zudem empfehlenswert, wenn das Werkstück nicht nur von der Innenseite der Biegezone her erhitzt wird, sondern auch von der Außenseite. Zusätzlich kann es von Vorteil sein, wenn die Biegezone beim und/oder unmittelbar nach dem Biegevorgang einer Druckbeaufschlagung quer zur Oberfläche des Werkstückes ausgesetzt wird. Dies ist insbesondere dann von Vorteil, wenn die Deckschichten faserverstärkt sind, da hierdurch einer Delaminierung entgegengewirkt wird.

Die Erhitzung der Biegezone sollte auf Schweißtemperatur und damit auf eine Temperatur wenige 10̸° Kelvin unter der Zersetzungstemperatur des Thermoplastes, also des Matrixmaterials, erfolgen.

Bei Anwendung eines Biegebalkens mit ebener Auflagefläche sollte die Erhitzung im wesentlichen drucklos durchgeführt werden. Bei Biegebalken mit gerundeter Anlagefläche sollte mit der Erhitzung gleichzeitig ein derart hoher Druck aufgebracht werden, daß der Biegebalken in die Decklage des Werkstückes eindringt, jedoch noch keine Verbiegung des Werkstückes eintritt.

Es besteht die Möglichkeit, nur einen der Biegezone benachbarten Abschnitt des Werkstückes um den Biegebalken herumzubiegen und den anderen Abschnitt festzuhalten. Günstiger ist es jedoch, daß beide der Biegezone benachbarten Abschnitte des Werkstückes um den ortsfest gehaltenen Biegebalken um jeweils den gleichen Winkel gebogen werden.

Die Druckbeaufschlagung der Biegezone kann auch schon während des Biegevorgangs beginnen. Vorzugsweise sollte die Druckausübung aber erst nach dem Biegen und zweckmäßigerweise von der Außenseite her gegen den Biegebalken mittels eines flächig zur Anlage bringbaren Druckbalkens erfolgen. Dabei sollte mindestens ein Druck von 0̸,2 N/mm² aufgebracht werden. Die Druckausübung erstreckt sich zweckmäßigerweise wenigstens über fünf Sekunden. Bei Verwendung von Werkstücken aus faserverstärktem Thermoplast sollte die Druckausübung zwischen fünf und dreißig Sekunden liegen, während sie bei Verwendung von Werkstücken aus Sandwichmaterial zwischen zwanzig und fünfzig Sekunden betragen sollte. Vermieden werden soll, daß die Druckbeaufschlagung so stark und so lang erfolgt, daß der Biegebalken zu stark in das Material eindringt und/oder Material zu den Seiten herausgedrück wird.

Nach der Erfindung ist ferner vorgesehen, daß die Biegezone zwischen dem Biegen und der Druckbeaufschlagung nochmals von der Innenseite her erhitzt wird, wobei die Erhitzung auf eine Temperatur wenige 10̸° Kelvin unterhalb der Zersetzungstemperatur des Kunststoffmaterials erfolgen sollte.

Die die Vorrichtung betreffende Aufgabe wird erfindungsgemäß durch eine Biegemaschine mit folgenden Merkmalen gelöst, wenn mit dieser Biegemaschine ein faserverstärkter Thermoplast gebogen werden soll:
a) die Biegemaschine hat einen Maschinenrahmen;
b) der Maschinenrahmen weist eine Werkstückauflage auf, die eine Auflageebene definiert;
c) im Maschinenrahmen ist ein Biegebalken angeordnet;
d) es ist eine Antriebseinrichtung zur Erzeugung einer derartigen Relativbewegung zwischen Biegebalken und Werkstückauflage vorgesehen, daß Biegebalken und Werkstück zur Anlage in der Biegezone bringbar und wenigstens einer der Biegezone benachbarten Abschnitte des Werkstückes um den Biegebalken schwenkbar sind;
e) dem Biegebalken gegenüber ist eine Druckauflage angeordnet;
f) es ist eine Heizeinrichtung zur Erhitzung der Biegezone des Werkstückes vorgesehen.
g) Biegebalken und Auflage sind zwecks Druckbeaufschlagung von beiden Werkstückoberflächen her relativ zueinander beweglich.

Diese Biegemaschine zeichnet sich durch einfachen konstruktiven Aufbau aus und ermöglicht dennoch das an sich schwierige Biegen von Werkstücken aus einem faserverstärkten Thermoplast. Dabei ist von Vorteil, wenn der Biegebalken als Heizschwert mit integrierter Heizeinrichtung ausgebildet ist, da sich dann ein einfacher Aufbau ergibt.

Sofern mit der Biegemaschine thermoplastisches Sandwichmaterial verarbeitet werden soll, sollte die Biegemaschine einen Aufbau mit folgenden Merkmalen haben:
a) die Biegemaschine (1) hat einen Maschinenrahmen (2);
b) der Maschinenrahmen (2) weist eine Werkstückauflage (20̸) auf, die eine Auflageebene definiert;
c) im Maschinenrahmen (2) ist ein Biegebalken (16, 49) angeordnet;
d) der Biegebalken (16, 49) ist als Heizschwert zur Erhitzung der Biegezone des Werkstückes (52, 53) ausgebildet;
e) es ist eine Antriebseinrichtung (10̸, 36, 37) zur Erzeugung einer derartigen Relativbewegung zwischen Biegebalken (16, 49) und Werkstückauflage (20̸) vorgesehen, daß Biegebalken (16, 49) und Werkstück (52, 53) zur Anlage in der Biegezone bringbar und wenigstens ein der Biegezone benachbarter Abschnitt des Werkstückes (52, 53) um den Biegebalken (16, 49) schwenkbar ist;
f) die Heizeinrichtung ist derart steuerbar, daß sie auch während der Betätigung der Antriebseinrichtung eingeschaltet bleibt.

Aufgrund der Tatsache, daß hier der Biegebalken als Heizschwert ausgebildet ist, ist gesichert, daß auch während des Biegevorgangs eine Wärmezufuhr erfolgt und somit der gesamt Querschnitt des Sandwichmaterials erhitzt bleibt. Für eine noch gleichmäßigere Temperaturverteilung beim Biegevorgang ist dann gesorgt, wenn dem Biegebalken gegenüber eine Heizeinrichtung zur Erhitzung der Biegezone von der Außenseite des Werkstückes her angeordnet ist, die Erhitzung also von beiden Seiten erfolgt.

Für die vorbeschriebene Biegemaschine ist es zudem nützlich, wenn dem Biegebalken gegenüber eine Druckauflage angeordnet wird, mit der eine Druckbeaufschlagung quer zur Oberfläche des Werkstückes durchgeführt werden kann. Diese Druckauflage kann dann mit der vorerwähnten Heizeinrichtung kombiniert werden.

Nach einem weiteren Merkmal der Erfindung ist vorgesehen, daß die Druckauflage als in Richtung auf den Biegebalken preßbarer Druckbalken ausgebildet ist. Der Druckbalken kann also aktiv in Richtung auf den Biegebalken bewegt werden. Seine Druckausübung läßt sich hierdurch exakt steuern. Dabei sollte die Druckauflage eine dem Biegebalken zugekehrte Druckfläche aus einem elastischen Material, beispielsweise einem Elastomer, haben. Vozugsweise sollte die Druckauflage der Formgebung der Außenseite der Biegezone angepaßt sein, also eine konkave Oberfläche haben.

Die Relativbewegung zwischen Werkstückauflage und Biegebalken und damit der Biegevorgang können auf verschiedene Weise erzeugt werden. So kann die Werkstückauflage ortsfest im Maschinenrahmen angeordnet und der Biegebalken derart bewegbar sein, daß er zwischen zwei Auflageabschnitten der Werkstückauflage durch die Auflagenebene hindurch bewegbar ist und auf diese Weise das Werkstück verbiegt. Als zweckmäßig hat sich jedoch die kinematisch umgekehrte Bauweise erwiesen, bei der die Werkstückauflage zwei beidseitig mit der Druckauflage sich erstreckende Auflagenabschnitte aufweist, die jeweils in Richtung auf den in Arbeitsposition befindlichen Biegebalken verschwenkbar sind. In diesem Fall ist der Biegebalken zumindest nach dem Aufsetzen auf das Werkstück unbeweglich und die Werkstückabschnitte werden durch Verschwenken der Auflagenabschnitte um den Biegebalken herumgebogen. Selbstverständlich besteht auch die Möglichkeit, sowohl den Biegebalken als auch die Auflagenabschnitte während des Biegevorgangs zu bewegen.

Nach der Erfindung ist ferner vorgesehen, daß die Werkstückauflage senkrecht zu ihrer Auflageebene in Bezug auf die Schwenkachse verstellbar ist. Auf diese Weise kann die Schwenkgeometrie der beiden Auflagenabschnitte an die jeweilige Dicke des Werkstückes derart angepaßt werden, daß die tatsächliche Verschwenkung der Abschnitte des Werkstückes im wesentlichen um eine auf der Innenseite des Werkstückes liegende Achse erfolgte.

Die Auflagenabschnitte sind zweckmäßigerweise als ebene Auflageplatten ausgebildet, um eine flächige Abstützung des Werkstückes bereitzustellen. Die Auflagenabschnitte sollten eine gemeinsame, vorzugsweise in der Werkstückoberfläche liegende Schwenkachse haben, um Relativbewegungen zwischen den Auflagenabschnitten und dem Werkstück während des Biegevorgangs zu vermeiden.

Besonders vorteilhaft ist, wenn der Biegebalken als Heizschwert mit integrierter Heizeinrichtung ausgebildet ist. Ein solches Heizschwert ist beispielsweise aus dem DE-GM 85 36 431.2 bekannt. Die Kombination von Biegebalken und Heizschwert vereinfacht den konstruktiven Aufbau der Biegemaschine außerordentlich und sichert zudem, daß auch während des Biegevorgangs ein hinreichender Wärmeübergang in das Material des Werkstückes stattfindet.

Der Biegebalken kann senkrecht zur Auflagenebene bewegbar gelagert sein. Es besteht jedoch auch die Möglichkeit, die Werstückauflage in Richtung auf den Biegebalken bewegbar zu machen, um das Werkstück an diesem zur Anlage bringen zu können.

Für das Biegen von Platten aus einem faserverstärktem Thermoplast hat es sich als zweckmäßig erwiesen, daß der Biegebalken eine von Biegekanten begrenzte, vorzugsweise ebene Auflagefläche hat, also die Auflagefläche nicht gerundet ist. Dies hat den Vorteil, daß der Bereich der Faserbewegung durch die Biegekanten eindeutig begrenzt wird und erlaubt es dem Zwischenraum an der Innenseite der Biegezone eindringen zu können, also hier einen Freiraum vorzufinden. Außerdem läßt sich hierdurch die Biegezone optisch besonders günstig gestalten.

Der Biegebalken kann aber auch eine an den gewünschten Biegeradius auf der Innenseite angepaßte, gerundete Auflagefläche haben. Dies ermöglicht beim Biegen von Sandwichmatieral das Eindringen des Biegebalkens in die Decklage und vergrößert auf diese Weise die Kontaktzone. Beim Biegen von faserverstärkten Thermoplasten treten dann praktisch keine Festigkeitsverlust auf.

Es versteht sich, daß das Biegen eines Werkstückes mit der vorbeschriebenen Vorrichtung vollautomatisch ablaufen kann, wenn eine entsprechende Steuereinrichtung vorgesehen ist, die die Bewegungen des Biegebalkens, der Auflagenabschnitte und/oder des Druckbalkens sowie deren zeitlichen Ablauf so steuern, daß in Abhängigkeit von der Art des Werkstückes ein optimales Biegeergebnis erreicht wird.

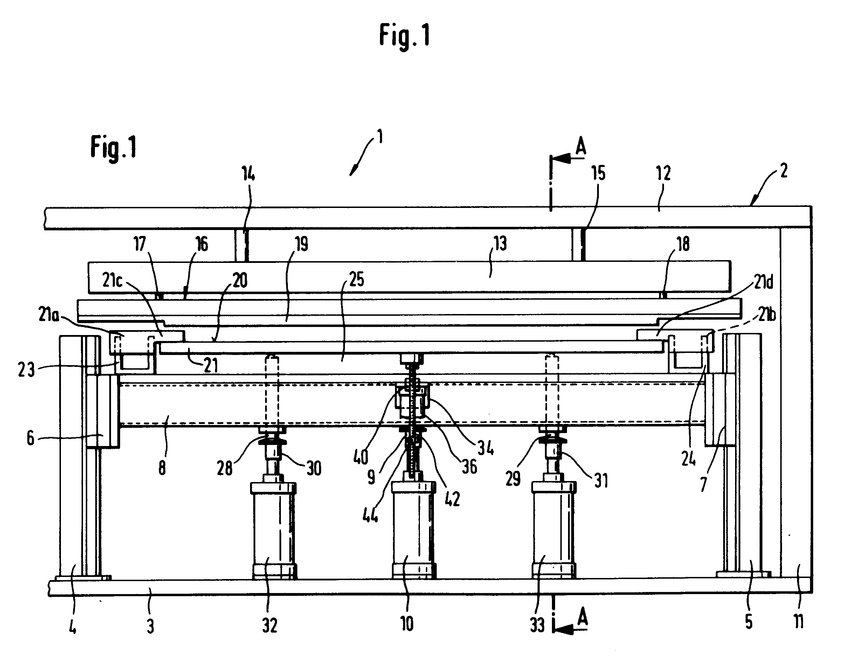

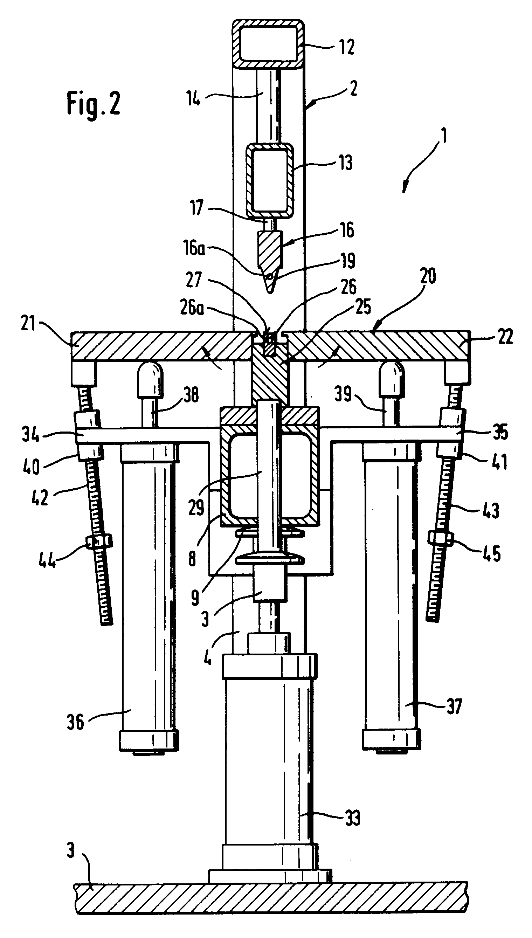

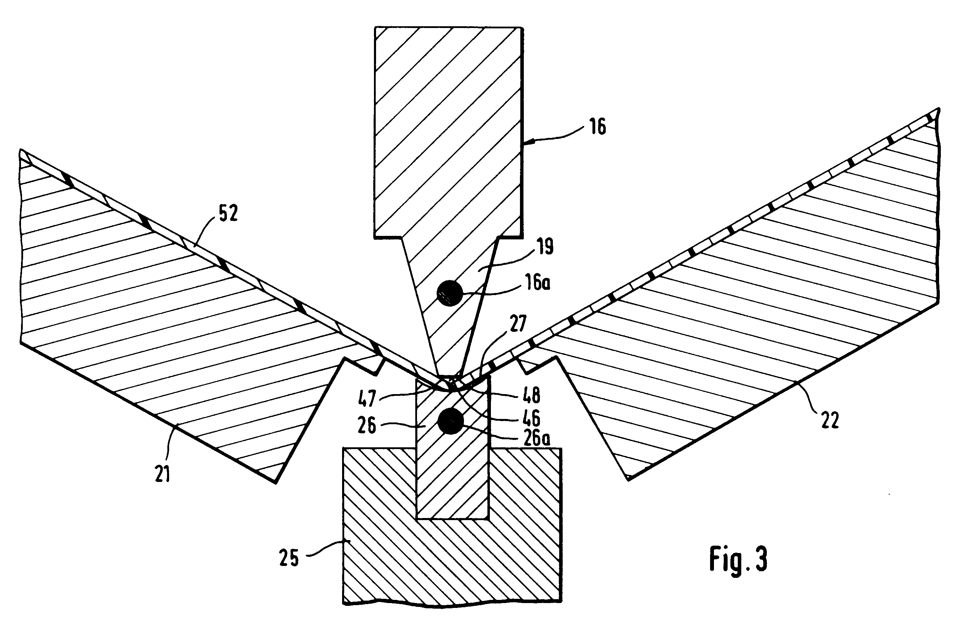

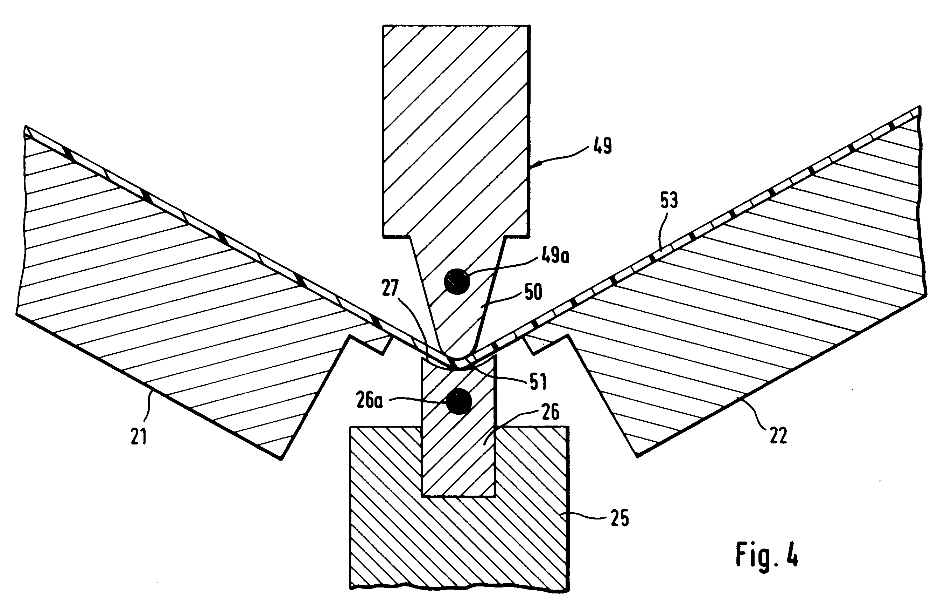

In der Zeichnung ist die Erfindung an Hand eines Ausführungsbeispiels näher veranschaulicht. Es zeigen:
- Figur (1): eine Vorderansicht der Biegemaschine gemäß der Erfindung;
- Figur (2): einen Querschnitt durch die Biegemaschine gemäß Figur (1) in der Ebene A-A;
- Figur (3): eine vergrößerte Darstellung eines Teils der Biegemaschine gemäß den Figuren (1) und (2) beim Biegen eines Werkstückes mit einem Biegebalken mit ebener Anlagefläche und
- Figur (4): eine vergrößerte Darstellung eines Teils der Biegemaschine gemäß den Figuren (1) und (2) beim Biegen eines Werkstückes mit einem gerundeten Biegebalken.

Die in den Figuren (1) und (2) dargestellten Biegemaschine (1) weist einen Maschinenrahmen (2) auf, der auf einer Grundplatte steht. Der Maschinenrahmen (2) weist zwei seitliche Ständer (4, 5) auf. An den Ständern (4, 5) sind zwei Schlitten (6, 7) vertikal verschieblich gelagert. An ihnen befestigt ist ein sich horizontal zwischen den Ständern (4, 5) erstreckender Querbalken (8), der in seiner Mitte durch einen Druckstempel (9) eines auf der Grundplatte (3) stehenden Druckzylinders (10̸) ruht. Durch entsprechende Druckbeaufschlagung des Zylinders (10̸) kann der Querbalken (8) - geführt durch die Schlitten (6, 7) vertikal verfahren werden.

Jeweils an der Außenseite jedes Ständers (4, 5) sind zwei weitere Ständer (11) angeordnet, von denen der linke Ständer aus Platzgründen nicht eingezeichnet ist. Diese Ständer (11) tragen einen Jochbalken (12) und sind über diesen miteinander verbunden. An dem Jochbalken (12) hängt ein Haltebalken (13), und Haltestangen (14, 15). Der Haltebalken (13) ist also vertikal relativ zu dem Jochbalken (12) bewegbar. An der Unterseite des Haltebalkens (13) hängt ein Biegebalken (16). Er ist mit dem Haltebalken (13) über zwei Haltebolzen (17, 18) verbunden.

Der Biegebalken (16) erstreckt sich parallel zu dem Querbalken (8), dem Jochbalken (12) und dem Haltebalken (13). Er weist einen nach unten spitz zulaufenden Biegeabschnitt (19) auf. Der Biegebalken (16) bildet gleichzeitig ein Heizschwert, wie es beispielsweise auch aus dem DE-GM 85 36 431.2 bekannt ist. In ihm befinden sich deshalb Heizstäbe (16a), mit dem sich an der Außenfläche des Biegeabschnitts (19) Temperaturen bis zu 40̸0̸ C° erzeugen lassen.

Unterhalb des Biegebalkens (16) befindet sich eine Werkstückauflage (20̸), welche aus zwei Auflageplatten (21, 22) besteht. Die Auflageplatten (21, 22) erstrecken sich in ihrer Grundposition horizontal und definieren eine Auflageebene für ein zu verbiegendes Werkstück. An ihren stirnseitigen Enden sind die Auflageplatten jeweils an in Figur (1) sich senkrecht zur Zeichnungsebene erstreckenden Schwenkhebeln (21a, 21b) befestigt, und zwar an der Unterseite von gegeneinander gerichteten Vorsprüngen (21c, 21d) der Schwenkhebel (21a, 21b). Die jeweils nur durch eine strichpunktierte Linie angedeutete Schraubenbefestigung ist so beschaffen, daß sich der vertikale Abstand zwischen den Vorsprüngen (21c, 21d) und den Auflageplatten (21, 22) verändert, bzw. eingestellt werden kann.

Die Schwenkhebel (21a, 21b) sind jeweils in einem gemeinsamen Lagerbock (23, 24) hoch schwenkbar gelagert. Durch die vorbeschriebene Einstellmöglichkeit läßt sich die von den Auflageplatten (21, 22) definierte Auflageebene in einem geeigneten Abstand zur durch die Lagerböcke (23, 24) bestimmten Schwenkachse einstellen, und zwar vorzugsweise so, daß sich die Schwenkachse in der Oberseite eines zu verbiegenden Werkstückes liegt. Im übrigen erstreckt sich diese Schwenkachse genau parallel unterhalb des Biegebalkens (16).

Zwischen den beiden Auflageplatten (21, 22) erstreckt sich parallel zu dem Biegebalken (16) und direkt unterhalb von diesem ein Druckbalken (25). Der Druckbalken (25) trägt in einer nach oben offenen Nut einen Drucksteg (26), aus einem geeigneten Material der eine konkave und mit den Seitenrändern in der Ebene der Auflageebene liegende Druckfläche (27) hat, welche dem Biegeabschnitt (19) des Biegebalkens (16) gegenüberliegt. In dem Drucksteg sind ebenfalls Heizstäbe (26a) angeordnet, um ihn erhitzen zu können.

Der Druckbalken (25) liegt mit seiner Unterseite in Normalstellung auf der Oberseite des Querbalkens (8). Den Querbalken (8) durchdringen zwei Druckübertragungsbolzen (28, 29). Sie sind in diesem vertikal verschieblich geführt und liegen mit ihren unteren Stirnseiten an vertikal ausfahrbaren Druckstempeln (30̸, 31) von Druckzylindern (32, 33) an, die symmetrisch zur Mitte des Querbalkens (8) und mit Abstand zu dessen Mitte von der Grundplatte (3) hochstehen. Durch Druckbeaufschlagung der Druckzylinder (32, 33) können die Druckstempel (30̸, 31) und damit der Druckbalken (25) zusammen mit der Gummileiste (26) in Richtung auf den Biegebalken (16) vertikal verfahren werden.

In der Mitte des Querbalkens (8) sind nach beiden Seiten auskragende Winkelhalter (34, 35) befestigt. An den horizontal auskragenden Teilen dieser Winkelhalter (34, 35) ist jeweils ein Druckzylinder (36, 37) befestigt, deren Druckstangen (38, 39) die Winkelhalter (34, 35) durchsetzen und nach oben ausfahrbar sind. Sie liegen mit ihren obenseitigen Enden an der jeweils darüberliegenden Auflageplatte (21) bzw. (22) an.

An den äußeren Enden der Winkelhalter (34, 35) sind um horizontale Achsen schwenkbare Führungshülsen (40̸, 41) gelagert, die von Gewindestangen (42, 43) durchsetzt sind. Die Gewindestangen (42, 43) sind - ebenfalls schwenkbar - an den Auflageplatten (21, 22) im Bereich der jeweils äußeren Kanten aufgehängt. Von unten her verstellbar aufgeschraubte Anschlagmuttern (44, 45) begrenzen den Schwenkwinkel der Auflageplatten (21, 22), wenn sie an die unteren Stirnseiten der Führungshülsen (40̸, 41) anschlagen.

Das Biegen eines plattenförmigen Werkstückes verläuft mit der Biegemaschine (1) grundsätlich wie folgt.

Zunächst wird das Werkstück derart auf die Werkstückauflage aufgelegt, daß sich die vorgesehene Biegezone genau oberhalb dem Drucksteg (26) des Druckbalkens (25) bzw. unterhalb des Biegebalkens (16) befindet. Die Biegemaschine (1) nimmt dabei die in den Figuren (1) und (2) dargestellte Grundposition ein. Der Biegebalken (16) befindet sich auf einer Temperatur wenige 10̸° Kelvin unterhalb der Zersetzungstemperatur des Kunststoffmaterials des Werkstückes. Sofern statt eines faserverstärkten Thermoplastes Sandwichmaterial verarbeitet wird, ist der Drucksteg (26) auf die gleiche Temperatur erhitzt.

Der Querbalken (8) wird dann durch Herausfahren des Druckstempels (9) aus dem Druckzylinder (10̸) nach oben bewegt. Er nimmt dabei den Druckbalken (25) sowie die Auflageplatten (21, 22) über die Lagerböcke (23, 24) zusammen mit der Abstützung durch die Druckzylinder (36, 37) mit nach oben, wobei die Auflageplatten (21, 22) nach wie vor in horizontaler Stellung verbleiben. Die Vertikalbewegung kommt zum Stillstand, wenn das Werkstück mit seiner obenseitigen Biegezone an dem Biegeabschnitt (19) des Biegebalkens (16) zur Anlage kommt. Durch die Anlage an dem Biegebalken (16) wird das Werkstück von der vorgesehenen Innenseite her in der Biegezone aufgeheizt.

Je nach Formgebung des Biegeabschnittes und des Biegebalkens geschieht die Aufheizung im wesentlichen drucklos oder mit einer gewissen Druckbeaufschlagung. Bei dem in den Figuren (1) bis (3) dargestellten Beispiel hat der Biegebalken (16) einen Biegeabschnitt (19) mit horizontaler, flächiger Auflagefläche (46), die durch seitliche Längskanten (47, 48) begrenzt wird. Bei diesem Biegebalken (16) wird lediglich ein Druck von 0̸,5 bis 2 bar erzeugt, um einen vollständigen Kontakt zwischen Biegebalken (12) und Werkstück zu gewährleisten und eventuelle Unebenheiten auszugleichen.

Das in Figur (4) dargestellte Ausführungsbeispiel hat einen etwas anders geformten Biegebalken (49) mit Heizstäben (49a), dessen Biegeabschnitt (50̸) eine entsprechend dem vorgesehenen, inneren Biegeradius geformte, gerundete Auflagefläche (51) aufweist. Da bei diesem Biegebalken (49) zunächst nur eine linienförmige Anlage am Werkstück erfolgt, wird das Werkstück durch weiteres Herauffahren des Querbalkens (8) mit einem gewissen Druck an dem Biegebalken (49) angedrückt. Dies hat zur Folge, daß der Biegeabschnitt (50̸) ein wenig in das Werkstück eindringt, wodurch die Kontaktzone sofort erheblich vergrößert wird.

Nachdem die in den Figuren (3) und (4) mit (50̸, 51) bezeichneten Werkstücke in den Biegezonen auf Schweißtemperatur gebracht worden sind, beginnt der Biegeprozeß. Hierzu werden die Druckzylinder (36, 37) derart mit Druck beaufschlagt, daß die Druckstangen (38, 39) ausfahren. Die Auflageplatten (21, 22) verschwenken gegeneinander und um den Biegebalken (16) bzw. (49) herum. Die Schwenkbewegungen werden durch Anlage der Anschlagmuttern (44, 45) an den Führungshülsen (40̸, 41) begrenzt. Diese Stellungen zeigen die Figuren (3) und (4).

Bei der Ausführung des Biegebalkens (16) gemäß Figur (3) wird der Bereich der Faserbewegung durch die Längskanten (47, 48) begrenzt. Das Plattenmaterial dringt in den Freiraum zwischen innenseitiger Biegezone und Auflagefläche (46) ein, was in Figur (3) nicht näher gezeigt ist. Die Breite der Auflagefläche (46) ist dabei so berechnet, daß das in den Freiraum eindringende Kunststoffmatrixvolumen hinreichend Raum findet, und diesen Raum ausfüllt.

Nach Abschluß des Biegevorgangs wird der Druckbalken (25) in Richtung auf den Biegebalken (16, 49) gedrückt, und zwar durch Aktivierung der Druckzylinder (32, 33). Die Druckstempel (30̸, 31) fahren dann nach oben aus und kommen wieder in Kontakt mit den Druckübertragungsbolzen (28, 29) und drücken diese und damit den Druckbalken (25) hoch. Hierdurch kommt dieser Drucksteg (26) in Kontakt mit der Außenseite der Biegezone des Werkstückes (52, 53). Beim Verbiegen von Sandwichmaterial wird der Druckbalken (25) schon vor dem Biegevorgang an dem Werkstück (52, 53) zur Anlage gebracht, um daß Werkstück (52, 53) von beiden Seiten zu erhitzen.

Der nach Abschluß des Biegevorgangs aufgeprägte Druck und dessen Einwirkungszeit hängt von dem Material des Werkstückes (52, 53) ab. Er sollte einerseits so hoch wie möglich sein, um die im äußeren Bereich bei faserverstärkten Verbundwerkstoffen gegebene Delamination rückgängig zu machen. Andererseits muß jedoch vermieden werden, daß der Biegebalken (16, 49) zu stark in das Material des Werkstückes (52, 53) eindringt oder das Material zur Seite gedrückt, wodurch die Dicke des Werkstückes (52, 53) in der Biegezone verringert würde. Hier haben sich je nach Material Drücke von 15 bis 40̸ bar bewährt. Die Druckausübung hat nicht nur zur Folge, daß eine Festigkeitssteigerung eintritt, sondern glättet auch die Werkstücksoberfläche, wobei das optische Ergebnis besonders günstig ist bei einem Biegebalken (16) entsprechend Figur (3).

Bei dem Beispiel gemäß Figur (3) ist es zweckmäßig, zwischen dem Biegevorgang und der Druckbeaufschlagung noch eine kurze Zeit zu warten, um eine weitere Erwärmung der Biegezone bis hin zu deren Außenbereich zu bewirken. Hierdurch wird eine besonders glatte Oberfläche erzielt.

Nach der Druckbeaufschlagung werden die Druckzylinder (32, 33) und der Druckzylinder (10̸) in die Ausgangsposition heruntergefahren. Die Auflageplatten (21, 22) verbleiben dabei noch in der Stellung gemäß den Figuren (3) bzw. (4). Die Innenseite der Biegezone wird dabei von dem Biegeabschnitt (19, 50̸) weggefahren, so daß das Werkstück (52, 53) in diesem Bereich unter die Glastemperatur auskühlen kann. Anschließend kann das Werkstück (52, 53) aus der Biegemaschine (1) entnommen werden.

Zur weiteren Erläuterung sei der Biegevorgang insbesondere hinsichtlich des zeitlichen Ablaufs anhand von zwei Beispielen naher erläutert.

### Beispiel 1

In der Biegemaschine (1) mit dem Biegebalken (6) wird ein Werkstück (52) geschoben, das aus einem faserverstärkten Verbundwerkstoff besteht, und zwar einer Polyetherimid-Kunststoffmatrix mit darin fünflagig eingelagerten Glasfasermatten. Der Ablauf gestaltet sich wie folgt:

| Phase | Zeit (Min.) | Vorgang |
|---|---|---|
| 1 | 0̸:0̸0̸ - 0̸:35 | Anlage des Werkstückes (52) am Biegebalken (16) bei einem Druck zwischen 0̸,0̸5 bis 0̸,2 N/mm² |
| 2 | 0̸:35 - 0̸:45 | Biegen des Werkstückes (52) durch Verschwenken der Auflageplatte (21, 22) um den vorgesehenen Biegewinkel; |
| 3 | 0̸:45 - 0̸:50̸ | weitere Erwärmung der Biegezone im wesentlichen drucklos; |
| 4 | 0̸:50̸ - 0̸:55 | Druckbeaufschlagung der Biegezone durch Hochfahren des Druckbalkens (25) mit einem Druck von 3 N/mm²; |
| 5 | 0̸:55 - 1:15 | Herunterfahren des Querbalkens (8) und Abkühlen in der Biegemaschine (1). |

### Beispiel 2

In der Biegemaschine (1) mit dem Biegebalken (9) wird ein Sandwichmaterial mit Deckschichten aus Phenolformaldehyd, verstärkt mit Glaserfasermatten, gebogen. Der Ablauf gestaltet sich wie folgt:

| Phase | Zeit (Min.) | Vorgang |
|---|---|---|
| 1 | 0̸:0̸0̸ - 2:45 | Erwärmung der Biegezone durch Anlage des Biegebalkens (49) unter einem Druck von 0̸,2 N/mm² und durch Anlage des Drucksteges (26); |
| 2 | 2:45 - 2:55 | Biegen des Werkstückes durch Verschwenken der Auflageplatten (21, 22) um den vorgesehenen Biegewinkel; |
| 3 | 2:55 - 3:30̸ | Druckbeaufschlagung der Biegezone durch Anpressen des Druckbalkens (25) mit einem Druck von 0̸,6 N/mm²; |
| 4 | 3:30̸ - 4:0̸0̸ | Herunterfahren des Querbalkens (8) und Abkühlen in der Biegemaschine (1). |

## Patentansprüche

1. Verfahren zum Biegen von plattenförmigen Werkstücken (52, 53) aus einem thermoplastischen Verbundwerkstoff, und zwar aus einem faserverstärkten Thermoplast, bei dem das Werkstück (52, 53) wenigstens von der vorgesehenen Innenseite der Biegezone her und auf die Biegezone begrenzt bis wenigstens zur Plastifizierung erhitzt wird und dann um einen an der Innenseite anliegenden Biegebalken (16, 49) herumgebogen wird,
dadurch gekennzeichnet, daß die Biegezone in plastifiziertem Zustand von beiden Oberflächen des Werkstückes (52, 53) her einer Druckbeaufschlagung ausgesetzt wird.

2. Verfahren nach Anspruch 1,
dadurch gekennzeichnet, daß die Wärmezufuhr während des Biegevorgangs fortgesetzt wird.

3. Verfahren zum Biegen von plattenförmigen Werkstücken (52, (53) aus einem thermoplastischen Verbundwerkstoff, und zwar aus einem thermoplastischen Sandwichmaterial, bei dem das Werkstück (52, 53) wenigstens von der vorgesehenen Innenseite der Biegezone her und auf die Biegezone begrenzt bis wenigstens zur Plastifizierung erhitzt wird,
dadurch gekennzeichnet, daß das Werkstück (52, 53) um einen auf dessen Innenseite anliegenden Biegebalken (16, 49) herumgebogen wird, wobei die Wärmezufuhr während des Biegevorgangs fortgesetzt wird.

4. Verfahren nach Anspruch 3,
dadurch gekennzeichnet, daß das Werkstück (52, 53) von der Innen- und der Außenseite der Biegezone her erhitzt wird.

5. Verfahren nach Anspruch 3 oder 4,
dadurch gekennzeichnet, daß die Biegezone beim und/oder unmittelbar nach dem Biegevorgang einer Druckbeaufschlagung quer zur Oberfläche des Werkstückes (52, 53) ausgesetzt wird.

6. Verfahren nach einem der Ansprüche 1 bis 5,
dadurch gekennzeichnet, daß die Erhitzung der Biegezone auf eine Temperatur wenige 10° K unterhalb
der Zersetzungstemperatur des Thermoplastes erfolgt.

7. Verfahren nach einem der Ansprüche 1 bis 6,
dadurch gekennzeichnet, daß die Erhitzung bei Anwendung eines Biegebalkens (16) mit ebener Anlagefläche (46) im wesentlichen drucklos durchgeführt wird.

8. Verfahren nach einem der Ansprüche 1 bis 6,
dadurch gekennzeichnet, daß bei Verwendung eines Biegebalkens (49) mit gerundeter Anlagefläche (51) gleichzeitig auch ein derart hoher Druck aufgebracht wird, daß der Biegebalken (49) in die Decklage des Werkstückes (53) eindringt, jedoch noch keine Verbiegung des Werkstückes (53) eintritt.

9. Verfahren nach einem der Ansprüche 1 bis 8,
dadurch gekennzeichnet, daß beide der Biegezone benachbarten Abschnitte des Werkstückes (52, 53) um den ortsfest gehaltenen Biegebalken (16, 49) um den jeweils gleichen Winkel gebogen werden.

10. Verfahren nach einem der Ansprüche 1 bis 9,
dadurch gekennzeichnet, daß die Druckausübung nach dem Biegen von der Außenseite her gegen den Biegebalken (16, 49) mittels eines flächig zur Anlage bringbaren Druckbalkens (25) erfolgt.

11. Biegemaschine zur Durchführung des Verfahren nach Anspruch (1) mit folgenden Merkmalen:
a) die Biegemaschine (1) hat einen Maschinenrahmen (2);
b) der Maschinenrahmen (2) weist eine Werkstückauflage (20) auf, die eine Auflageebene definiert;
c) im Maschinenrahmen (2) ist ein Biegebalken (16, 49) angeordnet;
d) es ist eine Antriebseinrichtung (10, 36, 37) zur Erzeugung einer derartigen Relativbewegung zwischen Biegebalken (16, 49) und Werkstückauflage (20) vorgesehen, daß Biegebalken (16, 49) und Werkstück (52, 53) zur Anlage in der Biegezone bringbar und wenigstens ein der Biegezone benachbarter Abschnitt des Werkstückes (52, 53) um den Biegebalken (16, 49) schwenkbar ist;
e) dem Biegebalken (16, 49) gegenüber ist eine Auflage (25, 26, 27) angeordnet;
f) es ist eine Heizeinrichtung (16a, 49a) zur Erhitzung der Biegezone des Werkstückes (52, 53) vorgesehen;
gekennzeichnet durch folgendes Merkmal:
g) Biegebalken (16, 49) und Auflage (25, 26, 27) sind zwecks Druckbeaufschlagung von beiden Werkstückoberflächen her relativ zueinander beweglich.

12. Biegemaschine nach Anspruch 11,
dadurch gekennzeichnet, daß der Biegebalken (16, 49) als Heizschwert mit integrierter Heizeinrichtung (16a, 49a) ausgebildet ist.

13. Biegemaschine zur Durchführung des Verfahrens nach Anspruch (3) mit folgenden Merkmalen:
a) die Biegemaschine (1) hat einen Maschinenrahmen (2);
b) der Maschinenrahmen (2) weist eine Werkstückauflage (20) auf, die eine Auflageebene definiert;
c) im Maschinenrahmen (2) ist ein Biegebalken (16, 49) angeordnet;
d) der Biegebalken (16, 49) ist als Heizschwert mit einer Heizeinrichtung (16a, 49a) zur Erhitzung der Biegezone des Werkstückes (52, 53) ausgebildet;
e) es ist eine Antriebseinrichtung (10, 36, 37) zur Erzeugung einer derartigen Relativbewegung zwischen Biegebalken (16, 49) und Werkstückauflage (20) vorgesehen, daß Biegebalken (16, 49) und Werkstück (52, 53) zur Anlage in der Biegezone bringbar und wenigstens ein der Biegezone benachbarter Abschnitt des Werkstückes (52, 53) um den Biegebalken (16, 49) schwenkbar ist;
gekennzeichnet durch folgendes Merkmal:
f) die Heizeinrichtung (16a, 49a) ist derart steuerbar, daß sie auch während der Betätigung der Antriebseinrichtung (10, 36, 37) eingeschaltet bleibt.

14. Biegemaschine nach Anspruch 13,
dadurch gekennzeichnet, daß dem Biegebalken (16, 49) gegenüber eine Heizeinrichtung (26a) zur Erhitzung der Biegezone von der Außenseite des Werkstückes (52, 53) her angeordnet ist.

15. Biegemaschine nach Anspruch 13 oder 14,
dadurch gekennzeichnet, daß dem Biegebalken (16, 49) gegenüber eine Druckauflage (25, 26, 27) angeordnet ist.

16. Biegemaschine nach Anspruch 14 und 15,
dadurch gekennzeichnet, daß in der Druckauflage (25, 26, 27) die Heizeinrichtung (26a) angeordnet ist.

## Claims

1. Process of bending plateshaped workpieces (52, 53) of a thermoplastic composite material, i.e. a fibre-reinforced thermoplast, in the course of which the workpiece (52, 53) is heated, at least up to plasticizing and at least from the provided inside of the bending zone and being limited to the bending zone, and then bent around a bending beam (16, 49) which abuts the inside, **characterized in that** the bending zone in its plasticized state is subjected to a pressure load from both surfaces of the workpiece (52, 53).

2. Process according to claim 1, **characterized in that** the heat delivery is continued during the bending process.

3. Process of bending plateshaped workpieces (52, 53) of a thermoplastic composite material, i.e. a thermoplastic sandwich material, in the course of which the workpiece (52, 53) is heated, at least up to plasticizing and at least from the provided inside of the bending zone and being limited to the bending zone, **characterized in that** the workpiece (52, 53) is bent around a bending beam (16, 49) which abuts the inside, and that the heat delivery is continued during the bending process.

4. Process according to claim 3, **characterized in that** the workpiece (52, 53) is heated from the inside and the outside of the bending zone.

5. Process according to claim 3 or 4, **characterized in that** the bending zone is during and/or immediately after the bending process subjected to a pressure load across the surface of the workpiece (52, 53).

6. Process according to one of claims 1 to 5, **characterized in that** the bending zone is heated to a temperature of a few 10°K below decomposition temperature of the thermoplast.

7. Process according to one of claims 1 to 6, **characterized in that** heating is carried out essentially free of pressure when using a bending beam (16) with a plane abutment surface (46).

8. Process according to one of claims 1 to 6, **characterized in that**, when using a bending beam (49) with rounded abutment surface (51), at the same time a pressure is applied which is so high that the bending beam (49) enters into a covering position of the workpiece (53), however, no bending of the workpiece (53) is carried out as yet.

9. Process according to one of claims 1 to 8, **characterized in that** both sections of the workpiece (52, 53) which are adjacent the bending zone are bent around the spatially fixed bending beam (16, 49) at a respectively identical angle.

10. Process according to one of claims 1 to 9, **characterized in that** the pressure is applied after bending from the outside towards the bending beam (16, 49) by means of a surface-abutting pressure beam (25).

11. Bending machine for carrying out the process of claim 1, comprising the following features:
a) the bending machine (1) has a machine frame (2);
b) the machine frame (2) comprises a workpiece resting surface (20) which defines a resting plane;
c) a bending beam (16, 49) is arranged in the machine frame (2);
d) a drive mechanism (10, 36, 37) for generating such a relative movement between bending beam (16, 49) and workpiece resting surface (20) is provided, and the bending beam (16, 49) and the workpiece (52, 53) are abutted in the bending zone, and at least one section of the workpiece (52, 53) adjacent the bending zone is pivotable around the bending beam (16, 49);
e) a resting surface (25, 26, 27) is arranged opposite the bending beam (16, 49);
f) a heating device (16a, 49a) for heating the bending zone of the workpiece (52, 53) is provided;
**characterized by** the following feature:
g) bending beam (16, 49) and resting surface (25, 26, 27) are movable relative to each other for the purpose of pressure loading of both workpiece surfaces.

12. Bending machine according to claim 11, **characterized in that** the bending beam (16, 49) is designed as a heating blade with integrated heating device (16a, 49a).

13. Bending machine for carrying out the process according to claim 3, comprising the following features:
a) the bending machine (1) comprises a machine frame (2);
b) the machine frame (2) comprises a workpiece resting surface (20) which defines a resting plane;
c) a bending beam (16, 49) is arranged in the machine frame (2);
d) the bending beam (16, 49) is designed as a heating blade with a heating device (16a, 49a) for heating the bending zone of the workpiece (52, 53);
e) a drive mechanism (10, 36, 37) is provided for generating such a relative movement between bending beam (16, 49) and workpiece resting surface (20), and bending beam (16, 49) and workpiece (52, 53) can be abutted in the bending zone, and at least one section of the workpiece (52, 53) adjacent the bending zone is pivotable around the bending beam (16, 49);
**characterized by** the following feature:
f) the heating device (16a, 49a) is controllable in such a manner that it remains switched on even whilst the drive mechanism (10, 36, 37) is being operated.

14. Bending machine according to claim 13, **characterized in that** opposite the bending beam (16, 49) is arranged a heating device (26a) for heating the bending zone from the outside of the workpiece (52, 53).

15. Bending machine according to claim 13 or 14, **characterized in that** the bending beam (16, 49) is arranged opposite a pressure seating (25, 26, 27).

16. Bending machine according to claim 14 and 15, **characterized in that** the heating device (26a) is arranged in the pressure seating (25, 26, 27).

## Revendications

1. Procédé pour plier des pièces (52, 53) en forme de plaques faites d'un matériau composite thermoplastique et plus spécialement d'un thermoplastique renforcé par fibres, selon lequel on chauffe la pièce (52, 53) au moins depuis le côté de la zone de pliage prévu pour être le côté intérieur et de façon limitée à la zone de pliage, au moins jusqu'à la plastification, et on la plie ensuite autour d'une poutre de pliage (16, 49) appliquée contre le côté intérieur,
caractérisé en ce que l'on expose la zone de pliage, à l'état plastifié, à une application de pression depuis les deux faces de la pièce (52, 53).

2. Procédé selon la revendication 1, caractérisé en ce que l'on poursuit l'apport de chaleur pendant l'opération de pliage.

3. Procédé pour plier des pièces (52, 53) en forme de plaques faites d'un matériau composite thermoplastique et plus spécialement d'un matériau sandwich thermoplastique, selon lequel on chauffe la pièce (52, 53) au moins depuis le côté de la zone de pliage prévu pour être le côté intérieur et de façon limitée à la zone de pliage, au moins jusqu'à la plastification,
caractérisé en ce que l'on plie la pièce (52, 53) autour d'une poutre de pliage (16, 49) appliquée contre son côté intérieur et on poursuit l'apport de chaleur pendant l'opération de pliage.

4. Procédé selon la revendication 3, caractérisé en ce que l'on chauffe la pièce (52, 53) depuis le côté intérieur et le côté extérieur de la zone de pliage.

5. Procédé selon la revendication 3 ou 4, caractérisé en ce que l'on expose la zone de pliage, pendant l'opération de pliage et/ou immédiatement après cette opération, à une application de pression perpendiculairement à la surface de la pièce (52, 53).

6. Procédé selon une des revendications 1 à 5, caractérisé en ce que l'on effectue le chauffage de la zone de pliage à une température qui est de quelques dizaines de degrés K au-dessous de la température de décomposition du thermoplastique.

7. Procédé selon une des revendications 1 à 6, caractérisé en ce que l'on effectue le chauffage pour l'essentiel sans pression en cas d'application d'une poutre de pliage (16) ayant une face d'appui plane (46).

8. Procédé selon une des revendications 1 à 6, caractérisé en ce que, en cas d'utilisation d'une poutre de pliage (49) ayant une face d'appui arrondie (51), on applique simultanément une pression si élevée que la poutre de pliage (49) pénètre dans la couche externe de la pièce (53), alors qu'il n'y a pas encore de pliage de la pièce (53).

9. Procédé selon une des revendications 1 à 8, caractérisé en ce que l'on plie les deux parties de la pièce (52, 53) voisines de la zone de pliage chacune du même angle autour de la poutre de pliage (16, 49) maintenue fixe.

10. Procédé selon une des revendications 1 à 9, caractérisé en ce que l'on applique la pression, après le pliage, depuis le côté extérieur en direction de la poutre de pliage (16, 49), au moyen d'une poutre de pressage (25) pouvant être amenée en contact par une surface.

11. Plieuse pour la mise en oeuvre du procédé selon la revendication (1), ayant les particularités suivantes:
a) la plieuse (1) possède un bâti de machine (2);
b) le bâti de machine (2) présente un porte-pièce (20) définissant un plan de support;
c) une poutre de pliage (16, 49) est agencée dans le bâti de machine (2);
d) un dispositif de commande ((10, 36, 37) est prévu pour produire un tel mouvement relatif entre la poutre de pliage (16, 49) et le porte-pièce (20) que la poutre de pliage (16, 49) et la pièce (52, 53) peuvent être amenées en contact dans la zone de pliage et qu'au moins une partie de la pièce (52, 53) voisine de la zone de pliage peut être amenée à pivoter autour de la poutre de pliage (16, 49);
e) un support (25, 26, 27) est disposé en regard de la poutre de pliage (16, 49);
f) un dispositif de chauffage (16a, 49a) est prévu pour chauffer la zone de pliage de la pièce (52, 53);
caractérisée en ce que:
g) la poutre de pliage (16, 49) et le support (25, 26, 27) sont déplaçables l'un par rapport à l'autre en vue de l'application de pression depuis les deux faces de la pièce.

12. Plieuse selon la revendication 11, caractérisée en ce que la poutre de pliage (16, 49) est réalisée comme une lame chauffante à dispositif de chauffage intégré (16a, 49a).

13. Plieuse pour la mise en oeuvre du procédé selon la revendication (3), ayant les particularités suivantes:
a) la plieuse (1) possède un bâti de machine (2);
b) le bâti de machine (2) présente un porte-pièce (20) définissant un plan de support;
c) une poutre de pliage (16, 49) est agencée dans le bâti de machine (2);
d) la poutre de pliage (16, 49) est réalisée comme une lame chauffante à dispositif de chauffage intégré (16a, 49a) pour chauffer la zone de pliage de la pièce (52, 53);
e) un dispositif de commande ((10, 36, 37) est prévu pour produire un tel mouvement relatif entre la poutre de pliage (16, 49) et le porte-pièce (20), que la poutre de pliage (16, 49) et la pièce (52, 53) peuvent être amenées en contact dans la zone de pliage et qu'au moins une partie de la pièce (52, 53) voisine de la zone de pliage peut être amenée à pivoter autour de la poutre de pliage (16, 49);
caractérisée en ce que:
f) le dispositif de chauffage (16a, 49a) peut être actionné de manière qu'il reste également enclenché pendant la manoeuvre du dispositif de commande (10, 36, 37).

14. Plieuse selon la revendication 13, caractérisée en ce qu'un dispositif de chauffage (26a) pour chauffer la zone de pliage depuis le côté extérieur de la pièce (52, 53) est agencé en regard de la poutre de pliage (16, 49).

15. Plieuse selon la revendication 13 ou 14, caractérisée en ce qu'un support de pressage (25, 26, 27) est agencé en regard de la poutre de pliage (16, 49).

16. Plieuse selon les revendications 14 et 15, caractérisée en ce que le dispositif de chauffage (26a) est placé à l'intérieur du support de pressage (25, 26, 27).
